# EUROPÄISCHE PATENTSCHRIFT

(11) **EP 1 866 536 B1**
(45) Veröffentlichungstag und Bekanntmachung des Hinweises auf die Patenterteilung: **02.11.2011**
(21) Anmeldenummer: 06725648.7
(22) Anmeldetag: 07.04.2006
(51) Int. Cl.: F02D 19/02, F02D 19/06, F02M 21/02, F02M 31/125

(54) **BETRIEBSVERFAHREN UND VORRICHTUNG FÜR EINE GASBETRIEBENE BRENNKRAFTMASCHINE**
OPERATING METHOD AND DEVICE FOR A GAS-DRIVEN INTERNAL COMBUSTION ENGINE
PROCEDE DE FONCTIONNEMENT ET DISPOSITIF POUR UN MOTEUR A COMBUSTION INTERNE FONCTIONNANT AU GAZ

(30) Priorität: 08.04.2005 DE 102005016281
(43) Veröffentlichungstag der Anmeldung: 19.12.2007
(73) Patentinhaber: Continental Automotive GmbH, 30165 Hannover (DE)
(72) Erfinder: SCHÜLE, Harry, 92431 Neunburg V. Wald (DE)
(86) Internationale Anmeldenummer: PCT/EP2006/061441
(87) Internationale Veröffentlichungsnummer: WO 2006/106145

(56) Entgegenhaltungen:
- EP-A- 1 209 336
- EP-A- 1 435 450
- DE-A1- 10 335 152
- DE-U1- 20 318 684
- US-A- 5 367 999
- US-A1- 2003 192 513
- US-B1- 6 701 905
- PATENT ABSTRACTS OF JAPAN Bd. 1997, Nr. 06, 30. Juni 1997 (1997-06-30) -& JP 09 053485 A (MITSUBISHI HEAVY IND LTD), 25. Februar 1997 (1997-02-25)
- PATENT ABSTRACTS OF JAPAN Bd. 1997, Nr. 08, 29. August 1997 (1997-08-29) -& JP 09 096254 A (MITSUBISHI MOTORS CORP), 8. April 1997 (1997-04-08)
- PATENT ABSTRACTS OF JAPAN Bd. 2003, Nr. 12, 5. Dezember 2003 (2003-12-05) -& JP 2004 353458 A (TOYOTA MOTOR CORP), 16. Dezember 2004 (2004-12-16)

## Beschreibung

Die Erfindung betrifft ein Verfahren für eine gasbetriebene Brennkraftmaschine gemäß dem Oberbegriff des Anspruchs 1.

Mit Gas betriebene Brennkraftmaschinen stellen aus wirtschaftlichen und umweltpolitischen Gründen eine Alternative zu herkömmlichen, mit Benzin oder Diesel betriebenen, Brennkraftmaschinen dar. Zur Erhöhung der Flexibilität des Benutzers werden auch bivalente Brennkraftmaschinen, die sowohl mit Gas als auch beispielsweise mit Benzin betrieben werden können, eingesetzt.

Mit Gas betriebene Systeme weisen üblicherweise einen Tank zur Speicherung des gasförmigen Brennstoffs auf. Die Speicherung des Brennstoffs erfolgt unter hohem Druck. Für erdgasbetriebene Fahrzeuge beträgt der Druck bei der Speicherung etwa 200 bar; bei mit Wasserstoff betriebenen Fahrzeugen kann dieser Druck Werte bis ca. 700 bar annehmen. Über Absperrventile und Druckminderer gelangt der gasförmige Brennstoff in eine Gasinjektionsanlage. Mittels der Gasinjektionsanlag zugeordnete Gasinjektionsventile wird die Brennkraftmaschine schließlich mit Gas versorgt. Der Druck in der Gasinjektionsanlage ist üblicherweise konstant und liegt für erdgasbetriebene Fahrzeuge in einem Bereich zwischen 3 bar und 15 bar. Durch den Betrieb der Gasinjektionsanlage mit konstantem Druck ergeben sich Nachteile, da der Druck so gewählt werden muss, dass für alle auftretenden Bedingungen ein zuverlässiger Betrieb der Brennkraftmaschine gewährleistet ist.

So sind bei hoher Belastung der Brennkraftmaschine hohe Drücke in der Gasinjektionsanlage wünschenswert, um einen hohen Volumenstrom durch die Gasinjektionsventile zu ermöglichen. Dagegen sind bei niedriger Belastung der Brennkraftmaschine, wie z. B. im Leerlauf, niedrige Drücke wünschenswert, da die Zufuhr von Gas bei niedrigen Drücken genauer gesteuert werden kann. Des Weiteren ist ein niedriger Druck bei einem Abstellen der Brennkraftmaschine oder einer Umstellung auf eine andere Kraftstoffart bei einem bivalenten System vorteilhaft, da die in der Gasinjektionsanlage befindliche Restgasmenge mit sinkendem Druck abnimmt. Somit nimmt auch die in die Umgebung oder in ein Saugrohr entweichbare Gasmenge durch undichte Ventilen ab. Die Gasinjektionsventile schließen auch in ihrer geschlossen Stellung nicht vollständig, wodurch auch nach dem Abstellen der Brennkraftmaschine eine bestimmte Gasmenge über die Gasinjektionsventile in die Brennkraftmaschine gelangt. Diese Gasmenge steigt mit dem in der Gasinjektionsanlage herrschenden Druck. Beim nächsten Starten der Brennkraftmaschine führt diese Gasmenge zu einer ungewollten Gemischanfettung und so zu erhöhten Schadstoffemissionen. Weiterhin kann durch den geringeren Druck mehr Gas aus dem Tank entnommen und so die Reichweite eines mit der Brennkraftmaschine angetriebenen Fahrzeugs erhöht werden.

DE 103 35 152 A1 beschreibt eine Überwachungsvorrichtung und ein Betriebsverfahren für eine gasbetriebene Brennkraftmaschine. Zur Überwachung einer gasbetriebenen Brennkraftmaschine wird ein leckagebedingter Gasverlust einer Gasinjektionsanlage mit einer Messeinrichtung ermittelt. Anschließend wird eine Betriebsgröße der Brennkraftmaschine, wie z. B. die von der Gasinjektionsanlage im Rahmen eines Startvorgangs injizierte Kraftstoffmenge, in Abhängigkeit von dem ermittelten leckagebedingten Gasverlust beeinflusst.

Die EP 1 209 336 A2 offenbart eine Gasinjektionsanlage für eine Brennkraftmaschine eines Kraftfahrzeugs. Ein Druckminderer der Gasinjektionsanlage stellt dabei in Abhängigkeit von einem oder einer Mehrzahl von Betriebsparametern der Brennkraftmaschine unterschiedliche Drücke für den Verbrennungsmotor bereit. Darüber hinaus wird anhand von Betriebsparametern der Brennkraftmaschine eine Öffnungszeit der Gasinjektionsventile bestimmt.

Die Aufgabe der Erfindung ist es, ein kostengünstiges Verfahren zur Verringerung der Schadstoffemissionen und Leistungssteigerung von gasbetriebenen Brennkraftmaschinen, und zur Erhöhung der Reichweite von mit gasbetriebenen Brennkraftmaschinen angetriebenen Fahrzeugen zur Verfügung zu stellen.

Die Aufgabe wird gelöst durch die Merkmale des unabhängigen Patentanspruchs. Vorteilhafte Ausgestaltungen der Erfindung sind in den Unteransprüchen gekennzeichnet.

Die Erfindung zeichnet sich aus durch ein Verfahren zur Anpassung des Drucks in einer Gasinjektionsanlage einer gasbetriebenen Brennkraftmaschine an die Betriebszustände der Brennkraftmaschine. Bei hoher Belastung der Brennkraftmaschine wird ein hoher Druck in der Gasinjektionsanlage durch die Vorrichtung eingestellt. Durch den hohen Druck wird ein hoher Volumenstrom durch der Gasinjektionsanlage zugehörige Gasinjektionsventile ermöglicht. Die von der Brennkraftmaschine abgegebene Leistung kann so optimiert werden. Bei niedriger Belastung oder beim Abstellen der Brennkraftmaschine wird ein niedrigerer Druck in der Gasinjektionsanlage eingestellt. Durch den niedrigeren Druck resultieren geringere, durch die Brennkraftmaschine verursachte, Schadstoffemissionen. Des Weiteren ermöglicht ein niedriger Druck eine genauere Zumessung der Gasmenge, welche der Brennkraftmaschine zugeführt wird. Weiterhin kann durch den geringeren Druck mehr Gas aus dem Tank entnommen und so die Reichweite eines mit der Brennkraftmaschine angetriebenen Fahrzeugs erhöht werden. Das erfindungsgemäße Verfahren und die Vorrichtung sind sowohl bei erdgasbetriebenen als auch mit Wasserstoff oder mit anderen Gassorten betriebenen Brennkraftmaschinen oder bei bivalenten Brennkraftmaschinen einsetzbar.

Bei der Erfindung werden Drehzahl, Drehmoment und Last der Brennkraftmaschine als Größen zur Vorgabe des Drucks in der Gasinjektionsanlage verwendet. Die oben genannten Größen ermöglichen besonders genaue Aussagen über den aktuellen Betriebszustand der Brennkraftmaschine.

In einer weiteren vorteilhaften Ausführung der Erfindung wird der Druck in der Gasinjektionsanlage auf einen sehr geringen Wert eingestellt, um einen Notlaufbetrieb der Brennkraftmaschine zu realisieren. Dieser Notlaufbetrieb wird bei geringer Gasbefüllung des Tanks angewendet, um die Reichweite des mit der Brennkraftmaschine angetriebenen Fahrzeugs zu erhöhen. Die Fahrt zu einer nahe liegenden Tankstelle wird so ermöglicht. Der Druck im Notlaufbetrieb ist geringer als der Druck, der im normalen Betrieb der Brennkraftmaschine auftritt. Durch den geringeren Druck kann mehr Gas aus dem Tank entnommen und so die Reichweite erhöht werden.

In einer weiteren vorteilhaften Ausführung wird der Druck in der Gasinjektionsanlage einer bivalenten Brennkraftmaschine an die Betriebszustände der Brennkraftmaschine angepasst. So kann z. B. der Druck vor der Umschaltung von dem Gasbetrieb in den Betrieb mit einem anderen Kraftstoff, wie z. B. Benzin oder Diesel, abgesenkt werden. Hierdurch wird die in der Gasinjektionsanlage verbleibende Gasmenge reduziert. Demzufolge ist auch die in einen Ansaugtrakt der Brennkraftmaschine über die nicht vollständig schließenden Gasinjektionsventile gelangte Gasmenge geringer. Somit ist auch die Gemischanfettung der mit Benzin oder Diesel betriebenen Brennkraftmaschine durch die im Ansaugtrakt befindliche Gasmenge geringer. Hierdurch resultiert ein reduzierter Schadstoffausstoß.

In einer weiteren vorteilhaften Ausgestaltung wird als Parameter zur Umschaltung von dem Normalbetrieb in den Notlaufbetrieb die Gasmenge im Tank oder bei bivalenten Brennkraftmaschinen die Menge einer anderen Kraftstoffart verwendet.

Der Druck in der Gasinjektionsanlage wird über ein Modul geregelt, welches mindestens ein Absperrventil zur Auftrennung der Gaszufuhr vom Tank in das Modul, einen Drucksensor zur Messung des Gasdrucks, einen Temperatursensor zur Messung der Gastemperatur, einen Druckminderer oder einen Druckregler zur Regelung des Drucks in der Gasinjektionsanlage, und eine elektronische Regeleinheit zur Bestimmung und Vorgabe des Drucks in der Gasinjektionsanlage enthält. Die Integration der oben genannten Komponenten in ein Modul führt zu erheblichen Vorteilen bei den Kosten und der Handhabung gegenüber einem System bei der alle oder einige Komponenten ein separates Gehäuse aufweisen. Der Aufwand für Kabel- und Leitungsverbindungen zwischen den Komponenten wird reduziert.

Das Modul kann neben den oben genannten Komponenten, ein Überdruckventil zur Begrenzung des Drucks in der Gasinjektionsanlage enthalten. Durch die Integration dieser zusätzlichen Komponente können Kosten eingespart werden. Das Überdruckventil kann auch für den schnellen Abbau des Druckes in der Gasinjektionsanlage eingesetzt werden.

Das Modul kann auch eine elektrische Heizung zur Beheizung des Moduls enthalten. Eine Heizung des in dem Modul befindlichen Druckreglers oder Druckminderers wird benötigt, um eine Vereisung von Bauelementen durch eine Entspannung des Gases zu verhindern. Durch die elektrische Heizung kann der aufwendige Anschluss des Moduls an den Kühlwasserkreislauf des Fahrzeugs entfallen.

Das Modul kann auch eine bidirektionale Schnittstelle zum Datenaustausch mit Steuergeräten, wie z. B. einem Motorsteuergerät enthalten. Zweckmäßigerweise ist die Schnittstelle in der elektronischen Regeleinheit integriert. Über die Schnittstelle können für die Anpassung des Drucks in der Gasinjektionsanlage an die Betriebszustände der Brennkraftmaschine wichtige Größen, wie z. B. Drehzahl, Drehmoment oder Last der Brennkraftmaschine, von dem Motorsteuergerät an das Modul übertragen werden. Des Weiteren können von dem Modul Daten, wie z. B. Druck im Tank oder in der Gasinjektionsanlage an andere Steuergeräte übermittelt werden.

Das Modul kann auch in den Tank integriert sein. Durch diese Integration werden Kosten reduziert und die Handhabung des Systems vereinfacht, da eine Hochdruckleitung zwischen dem Tank und dem Modul entfällt.

Ausführungsbeispiele der Erfindung werden im Folgenden anhand der schematischen Zeichnungen erläutert. Es zeigen:
- Figur 1: eine schematische Darstellung einer gasbetriebenen Brennkraftmaschine und
- Figur 2: ein Ablaufdiagramm eines Verfahren zur Anpassung des Drucks in einer Gasinjektionsanlage an die Betriebszustände einer Brennkraftmaschine.

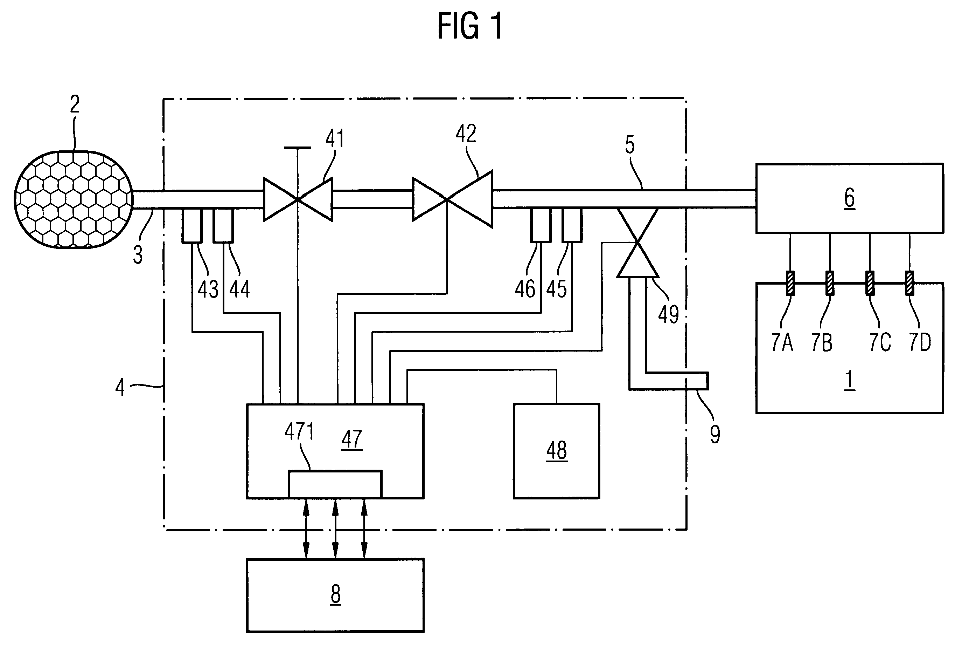

Figur 1 zeigt die schematische Darstellung einer gasbetriebenen Brennkraftmaschine 1. Der gasförmige Kraftstoff wird in einem Tank 2 unter hohem Druck gespeichert. Für erdgasbetriebene Brennkraftmaschinen 1 beträgt der Druck bei der Speicherung etwa 200 bar, bei mit Wasserstoff betriebenen Brennkraftmaschinen 1 kann dieser Druck Werte bis ca. 700 bar annehmen. Über eine Hochdruckleitung 3 wird der gasförmige Kraftstoff über ein Absperrventil 41, einen Druckminderer oder Druckregler 42 einer Niederdruckleitung 5 zugeführt. Über das Absperrventil 41 kann die Gaszufuhr aus dem Tank 2 gesperrt werden, wie es z. B. bei einem Abstellen der Brennkraftmaschine 1 oder bei der Umschaltung auf eine andere Kraftstoffart bei bivalenten Brennkraftmaschinen 1 erforderlich ist. Der Druckminderer oder Druckregler 42 dient zur Reduzierung des Gasdruckes auf die für die Niederdruckleitung 5 benötigten Werte. Die Niederdruckleitung 5 ist mit einer Gasinjektionsanlage 6 verbunden. Über der Gasinjektionsanlage 6 zugeordnete Gasinjektionsventile 7A bis 7D wird die Brennkraftmaschine 1 mit dem gasförmigen Kraftstoff versorgt. Üblicherweise ist der Druck in der Niederdruckleitung 5 und der Gasinjektionsanlage 6 konstant und liegt für ergasbetriebene Brennkraftmaschinen 1 in einem Bereich zwischen 3 bar und 15 bar. Das erfindungsgemäße Verfahren sieht eine Anpassung des Drucks in der Gasinjektionsanlage 6 an die Betriebszustände der Brennkraftmaschine 1 vor. Der Druck in der Niederleitung 5 ist gleich dem Druck in der Gasinjektionsanlage 6.

In der gezeigten Darstellung nach Figur 1 sind das Absperrventil 41 und der Druckminderer oder der Druckregler 42 in einem Modul 4 zu einer baulichen Einheit zusammengefasst. Weiterhin enthält das Modul einen Temperatursensor 43 und einen Drucksensor 44 zur Erfassung des Drucks und der Temperatur auf der Hochdruckseite, einen entsprechenden Temperatursensor 45 und Drucksensor 46 auf der Niederduckseite, eine elektronische Regeleinheit 47, eine elektrische Heizung 48 und ein Überdruckventil 49. In der elektronischen Regeleinheit 47 werden die Sollwerte des Drucks in der Gasinjektionsanlage 6 in Abhängigkeit von den Betriebszuständen der Brennkraftmaschine 1 bestimmt. Durch die Verbindungsleitungen zwischen der elektronischen Regeleinheit 47 und den anderen in dem Modul 4 befindlichen Komponenten wird verdeutlicht, dass in der elektronischen Regeleinheit 47 die Signale der Druck- und Temperatursensoren zur Regelung des Drucks in der Gasinjektionsanlage 6 ausgewertet und Stellsignale für das Absperrventil 41, den Druckminderer oder Druckregler 42, die elektrische Heizung 48 und das Überdruckventil 49 generiert werden. Über die Verbindungsleitungen können auch für die Diagnose der einzelnen Komponenten wichtige Informationen übertragen werden.

Weiterhin beinhaltet die elektronische Regeleinheit 47 eine bidirektionale Schnittstelle 471 zum Austausch von Daten mit einem außerhalb des Moduls befindlichen Steuergerät 8. Über das Steuergerät 8 können zur Vorgabe des Drucks in der Gasinjektionsanlage 6 wichtige Daten, wie z. B. die Drehzahl, das Drehmoment, oder die Last der Brennkraftmaschine 1, an die elektronische Regeleinheit 47 übermittelt werden. Des Weiteren ist die Übertragung von Daten ausgehend von der elektronischen Regeleinheit 47 an das Steuergerät 8 möglich. So können z. B. die Daten der Druck- oder Temperatursensoren oder Diagnosedaten an das Steuergerät 8 übertragen werden. Als Steuergerät 8 kann z. B. ein Motorsteuergerät verwendet werden. Die bidirektionale Schnittstelle 471 wird zweckmäßigerweise als elektronischer Datenbus, z. B. als CAN-Bus, ausgeführt.

Durch die elektrische Heizung 48, welche zur Beheizung des Moduls 4 dient, kann der aufwendige Anschluss des Moduls 4 an einen Kühlwasserkreislauf der Brennkraftmaschine 1 entfallen. Das Überdruckventil 49 dient zur Begrenzung des Drucks in der Gasinjektionsanlage 6. Über eine Umgebungsleitung 9 kann über das Überdruckventil 49 der Druck in der Gasinjektionsanlage 6 reduziert werden.

In der in Figur 1 dargestellten Ausführung befindet sich das Modul 4 außerhalb des Tanks 2. Das Modul 4 kann auch in den Tank 2 integriert werden. Die Hochdruckleitung 3 entfällt in diesem Fall. Die Anwendung des erfindungsgemäßen Verfahrens kann auch mit einer Vorrichtung erfolgen, bei der sämtliche oder ein Teil der in Figur 1 gezeigten Komponenten 41 bis 49 nicht in dem Modul 4 integriert sind, sondern ein eigenes Gehäuse aufweisen. Des Weiteren sind für die Durchführung des erfindungsgemäßen Verfahrens nicht sämtliche in Figur 1 gezeigten Komponenten 41 bis 49 erforderlich.

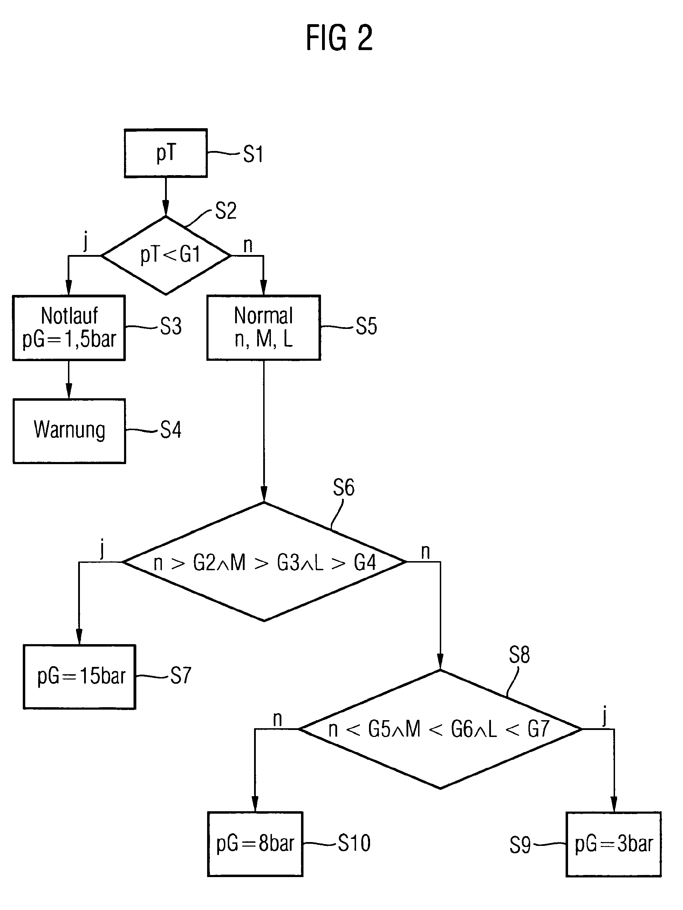

Figur 2 zeigt ein Ablaufdiagramm eines möglichen Verfahrens zur Anpassung des Drucks in der Gasinjektionsanlage 6 an die Betriebszustände der Brennkraftmaschine 1. In dem Schritt S1 wird der Druck pT in dem Tank 2 von dem Drucksensor 44 erfasst und der elektronischen Regeleinheit 47 übermittelt. Anschließend wird in dem Schritt S2 geprüft, ob der gemessene Druck pT im Tank 2 kleiner als ein Grenzwert G1 ist. Ist dieses der Fall, wird entschieden, dass die verbleibende Gasmenge im Tank 2 gering genug ist, um in dem Schritt S3 den Notlaufbetrieb "Notlauf" einzuleiten. Der Solldruck pG in der Gasinjektionsanlage 6 wird auf den sehr niedrigen Wert von 1,5 bar vorgegeben, um die Reichweite eines mit der Brennkraftmaschine 1 angetriebenen Fahrzeuges zu erhöhen. In dem Schritt S4 wird einem Fahrer des Fahrzeugs eine Warnmeldung "Warnung" angezeigt. Die Warnmeldung "Warnung" kann z. B. über die bidirektionale Schnittstelle 471 an das Steuergerät 8 ausgegeben und von dort zur Anzeige gebracht werden. In dem anderen Fall werden in dem Schritt S5 im Normalbetrieb "Normal" die Drehzahl n, das Drehmoment M und die Last L der Brennkraftmaschine 1 erfasst. Diese Größen können vom Steuergerät 8 an die elektronische Regeleinheit 47 über die bidirektionale Schnittstelle 471 übertragen werden. In dem folgenden Schritt S6 wird geprüft, ob die Drehzahl n größer als ein Grenzwert G2, das Drehmoment M größer als ein Grenzwert G3 und die Last L der Brennkraftmaschine 1 größer als ein Grenzwert G4 sind. Ist diese Bedingungen erfüllt, so wird die Brennkraftmaschine 1 mit hoher Belastung betrieben und in dem Schritt S7 für den Solldruck pG in der Gasinjektionsanlage 6 ein hoher Wert von beispielsweise 15 bar vorgegeben. Ist diese Bedingungen nicht erfüllt, erfolgt in dem Schritt S8 die Prüfung, ob die Drehzahl n kleiner als ein Grenzwert G5, das Drehmoment M kleiner als ein Grenzwert G6 und die Last der Brennkraftmaschine 1 kleiner als ein Grenzwert G7 sind. Ist dieses der Fall, so wird die Brennkraftmaschine 1 nur mit geringer Belastung betrieben und in dem Schritt S9 wird für den Solldruck pG in der Gasinjektionsanlage 6 ein niedriger Wert von beispielsweise 3 bar vorgegeben. Falls die Bedingung nicht erfüllt ist, so erfolgt in dem Schritt S10 für die Vorgabe des Solldrucks pG in der Gasinjektionsanlage 6 ein Wert von beispielsweise 8 bar.

In diesem Ausführungsbeispiel werden, abhängig von den Betriebszuständen der Brennkraftmaschine 1, vier Werte für den Solldruck pG in der Gasinjektionsanlage 6 vorgegeben. Für ein anderes Ausführungsbeispiel ist es denkbar, dass die jeweiligen Solldrücke pG durch eine mathematische Berechnungsvorschrift über Betriebsparameter der Brennkraftmaschine 1 bestimmt werden. Die Regelung des Drucks in der Gasinjektionsanlage 6 auf den jeweiligen Sollwert pG kann über die Erfassung des vom Drucksensor 46 gemessenen Wertes erfolgen. In der elektronischen Regeleinheit 47 werden, abhängig von der Differenz zwischen Solldruck pG und dem gemessenen Wert, Stellgrößen für den Druckminderer oder den Druckregler 42 oder das Überdruckventil 49 bestimmt. Das Überdruckventil 49 kann zu einer Regelung des Drucks in der Gasinjektionsanlage 6 herangezogen werden, wenn ein schneller Abbau des Druckes erforderlich ist.

## Patentansprüche

1. Verfahren für eine gasbetriebene Brennkraftmaschine (1), wobei
der Druck in einer der Brennkraftmaschine (1) zugehörigen Gasinjektionsanlage (6) an die Betriebszustände der Brennkraftmaschine (1) angepasst wird, **dadurch gekennzeichnet, dass**
zur Vorgabe des Drucks in der Gasinjektionsanlage (6) ein Wert einer Drehzahl (n), ein Wert eines Drehmomentes (M) und ein weiterer Wert einer Last (L) der Brennkraftmaschine (1) verwendet werden.

2. Verfahren gemäß Anspruch 1, **dadurch gekennzeichnet, dass** in einer elektronischen Regeleinheit (47) Sollwerte des Drucks für die Gasinjektionsanlage (6) in Abhängigkeit von Betriebszuständen der Brennkraftmaschine (1) bestimmt werden.

3. Verfahren gemäß Anspruch 2, **dadurch gekennzeichnet, dass** in der elektronischen Regeleinheit (47) Signale eines Druck-(44, 46) und eines Temperatursensors (43, 45) zur Regelung des Drucks in der Gasinjektionsanlage (6) auswertbar und Stellsignale für ein Absperrventil (41), einen Druckminderer oder Druckregler (42), eine elektrische Heizung (48) und ein Überdruckventil (49) generiert werden.

4. Verfahren gemäß einem der Ansprüche 1 bis 3, **dadurch gekennzeichnet, dass** ein gegenüber denen im normalen Betrieb der Brennkraftmaschine (1) auftretenden Drücken geringerer Druck in der Gasinjektionsanlage (6) vorgegeben wird, um einen Notlaufbetrieb der Brennkraftmaschine (1) zu ermöglichen und die Reichweite eines mit der Brennkraftmaschine (1) angetriebenen Fahrzeugs zu erhöhen.

5. Verfahren gemäß einem der Ansprüche 1 bis 4, wobei die gasbetriebene Brennkraftmaschine (1) Teil einer bivalenten Brennkraftmaschine (1) ist, die neben dem Betrieb mit Gas auch mit einem anderen Kraftstoff, insbesondere Benzin oder Diesel, betrieben werden kann.

6. Verfahren nach Anspruch 4 oder 5, **dadurch gekennzeichnet, dass** eine Umschaltung in den Notlaufbetrieb abhängig von der in einem Tank (2) befindlichen Gasmenge oder bei bivalenten Brennkraftmaschinen (1) in Abhängigkeit der Menge einer anderen Kraftstoffart erfolgt.

## Claims

1. Method for a gas-operated internal combustion engine (1) wherein
the pressure in a gas-injection system (6) belonging to the internal combustion engine (1) is matched to the operating conditions of the internal combustion engine (1), **characterised in that**
a value of a rotational speed (n), a value of a torque (M) and a further value of a load (L) of the internal combustion engine (1) are used for defining the pressure in the gas-injection system (6).

2. Method according to claim 1, **characterised in that** desired values for the pressure in the gas-injection system (6) are determined in an electronic control unit (47) as a function of operating conditions of the internal combustion engine (1).

3. Method according to claim 2, **characterised in that** signals of a pressure sensor (44, 46) and a temperature sensor (43, 45) for controlling the pressure in the gas-injection system (6) can be evaluated in the electronic control unit (47) and actuating signals for a shutoff valve (41), a pressure reducer or pressure controller (42), an electric heater (48) and a pressure-release valve (49) are generated there.

4. Method according to one of claims 1 to 3, **characterised in that** a pressure lower than the pressures occurring during normal operation of the internal combustion engine (1) is defined in the gas-injection system (6) to enable an emergency operating mode of the internal combustion engine (1) and to increase the range of a vehicle being driven by means of the internal combustion engine (1).

5. Method according to one of claims 1 to 4, wherein the gas-operated internal combustion engine (1) is part of a bivalent internal combustion engine (1) which, alongside using gas for its operation, can also be operated using another fuel, in particular petrol or diesel.

6. Method according to 4 or 5, **characterised in that** a changeover to the emergency operating mode takes place as a function of the amount of gas in a tank (2) or, in the case of bivalent internal combustion engines (1), as a function of the amount of another type of fuel.

## Revendications

1. Procédé destiné à un moteur à combustion interne (1) fonctionnant au gaz, dans lequel :
la pression dans une installation d'injection de gaz (6) appartenant au moteur à combustion interne (1) est adaptée aux états de fonctionnement du moteur à combustion interne (1), **caractérisé en ce que**
pour prescrire la pression dans l'installation d'injection de gaz (6), on utilise une valeur d'un régime (n), une valeur d'un couple de rotation (M) et une valeur d'une charge (L) du moteur à combustion interne (1).

2. Procédé selon la revendication 1, **caractérisé en ce que**, dans une unité de réglage électronique (47), des valeurs théoriques de la pression sont déterminées pour l'installation d'injection de gaz (6) en fonction des états de fonctionnement du moteur à combustion interne (1).

3. Procédé selon la revendication 2, **caractérisé en ce que**, dans l'unité de réglage électronique (47), des signaux d'un capteur de pression (44, 46) et d'un capteur de température (43, 45) peuvent être exploités pour régler la pression dans l'installation d'injection de gaz (6) et des signaux de réglage sont générés pour une vanne d' arrêt (41), un limiteur de pression ou un régulateur de pression (42), un chauffage électrique (48) et une soupape de surpression (49).

4. Procédé selon l'une quelconque des revendications 1 à 3, **caractérisé en ce qu'**une pression plus faible que celles apparaissant au cours du fonctionnement normal du moteur à combustion interne (1) est prédéfinie dans l'installation d'injection de gaz (6) pour permettre un fonctionnement d'urgence du moteur à combustion interne (1) et pour accroître la portée d'un véhicule entraîné par le moteur à combustion interne (1).

5. Procédé selon l'une quelconque des revendications 1 à 4, dans lequel le moteur à combustion interne (1) fonctionnant au gaz fait partie d'un moteur à combustion interne (1) bivalent, qui peut fonctionner, en dehors du fonctionnement au gaz, également avec un autre carburant, en particulier l'essence ou le diesel.

6. Procédé selon la revendication 4 ou 5, **caractérisé en ce qu'**une commutation en fonctionnement d'urgence s'effectue en fonction de la quantité de gaz se trouvant dans un réservoir (2) ou, dans les moteurs à combustion interne (1) bivalents, en fonction de la quantité d'un autre type de carburant.
